# EUROPEAN PATENT SPECIFICATION

(11) **EP 3 826 979 B1**
(45) Date of publication and mention of the grant of the patent: **27.12.2023**
(21) Application number: 19733823.9
(22) Date of filing: 02.07.2019
(51) Int. Cl.: C04B 41/71

(54) **PROCESS TO OBTAIN A CONCRETE STRUCTURE WITH A SURFACE LAYER OF RESIN-MODIFIED CONCRETE**
VERFAHREN ZUR HERSTELLUNG EINER BETONSTRUKTUR MIT EINER OBERFLÄCHENSCHICHT AUS HARZMODIFIZIERTEM BETON
PROCÉDÉ POUR OBTENIR UNE STRUCTURE EN BÉTON COMPORTANT UNE COUCHE DE SURFACE DE BÉTON MODIFIÉ PAR RÉSINE

(30) Priority: 26.07.2018 EP 18185856
(43) Date of publication of application: 02.06.2021
(73) Proprietor: SIKA TECHNOLOGY AG, 6340 Baar (CH)
(72) Inventor: JERNEI, Michael, 6700 Bludenz (AT); STÖTZEL, Timo, 57080 Siegen (DE); FRITZ, Bertram, 6754 Klösterle (AT)
(74) Representative: Sika Patent Attorneys
(86) International application number: PCT/EP2019/067735
(87) International publication number: WO 2020/020585

(56) References cited:
- DE-A1- 19 851 855
- US-A1- 2016 168 030
- DATABASE WPI Week 198909 Thomson Scientific, London, GB; AN 1989-067107 XP002786130, & JP S56 145182 A (OHBAYASHI GUMI KK) 11 November 1981 (1981-11-11)
- DATABASE WPI Week 198810 Thomson Scientific, London, GB; AN 1988-068970 XP002786131, & JP S63 25282 A (OHBAYASHI GUMI KK) 2 February 1988 (1988-02-02) -& CHEMICAL ABSTRACTS, vol. 108, no. 20, 16 May 1988 (1988-05-16), Columbus, Ohio, US; abstract no.: 172497g, XP000157466

## Description

### Technical Area

The invention concerns a process for the preparation of a concrete structure comprising a layer of concrete and a waterbased curable resin system which is incorporated therein as well as coated structures, which are obtainable according to this process. The process provides particular advantages in terms of strong bonding and high peel strength between the concrete substrate and a coating layer applied thereon.

### State of the Art

For improving properties such as water tightness, durability and aesthetics concrete structures are often coated, e.g. in industrial buildings, infrastructure construction such as bridges and tunnels, public buildings such as parking garages, as well as residential buildings. The most important resin systems for coating concrete structures are based on epoxy resins, which have excellent properties e.g. with regard to chemical resistance, hardness and longevity. Epoxy resin based coatings are typically used in a system build-up comprising a primer layer and one or several coating layers.

The bonding of epoxy resin based coatings on concrete substrates is primarily based on physical forces, due to the significantly different properties of the epoxy resin and the concrete substrate. To ensure that adequate physical bonding (especially against shear stresses) of an epoxy coating on a concrete surface is achieved, the surface must be sufficiently rough which is typically ensured by shot blasting the hardened concrete structure prior to the application of the epoxy coating. The shot blasting is executed after the concrete has sufficiently hardened (e.g., to a maximum humidity of 4% cement moisture), typically about 28 days after the concrete has been casted. While some primers are known which allow adequate bonding to surfaces having a higher humidity (i.e., to a maximum of 6% moisture) which allows for an application after a shorter period of time (e.g., after 7 days), also for this bonding a relatively long drying time between the casting of the concrete and the further processing by application of the epoxy resin is required.

An alternative to the application of an epoxy primer on shot blasted concrete is the so called "early impregnation" of a cast concrete surface, wherein the epoxy primer is applied on the setting concrete (see, e.g., "Kunststoffe für den Bautenschutz und die Betoninstandsetzung", R. Gieler, A. Ronsburg, p. 338). In the practice of early impregnation, the surface of the concrete substrate is not allowed to be power-floated and must stay rough or is even roughened on purpose after levelling with a brush. Subsequently, a relatively large amount of an epoxy primer is applied on the concrete. Due to the uptake of water by the cement during the hardening reaction, the primer is at least in part sucked into the concrete surface.

One disadvantage of early impregnation is however, that in case not all of the primer which has been applied on the concrete surface is sucked into the concrete, the remaining primer has to be broadcasted with sand which involves an additional coating step to get a smooth surface before applying the next coating. In addition, early impregnation suffers from the disadvantage, that the bonding achieved is influenced by many factors which are outside the control of the applicator (e.g. temperature, humidity, waiting time, cement quality and w/c (= water/cement ratio). This frequently results in poor bonding and does not allow a comparable and reproducible performance in comparison to an application of an epoxy resin based coating on a shot blasted dry concrete.

The use of a fast hardening concrete, which is based on a ternary binder system (Portland cement, calcium aluminate cement and calcium sulfate) allows to improve bonding and reduces the processing time. Such materials are e.g. commercialized by Sika AG under the trade name SikaScreed^{®} HardTop-60. If an epoxy coating such as Sikafloor^{®}-161 (also called epoxy primer) is directly applied onto a cast surface of SikaScreed^{®} HardTop-60 in early impregnation 6 hours after casting, the enhanced "hydration suction" of the ternary binder provides improved bonding of the coating to the underlying SikaScreed^{®} HardTop-60 surface.

However, also this system suffers from the disadvantage that the bonding is still strongly dependent on the climatic parameters, the timing and the skill of the applicator, so that the reproducibility of achieving strong bonding is low. Moreover, if the surface of the SikaScreed^{®} HardTop-60 is smoothed with blades in a power floating step, the peel strength of the coating is significantly reduced, so that the coating can be removed from the surface, e.g. with a screw driver. The low adhesion force is clearly visible in a peel test.

JP S56-145182 A discloses treating a surface layer of concrete, comprising injecting an epoxy resin into the surface layer of the concrete before the concrete is hardened.

Thus, there is an unmet need for an improved process for coating concrete structures with coating compositions, which provides good bonding, in particular high peel strength, to the cured coating.

### Description of the invention

In a first aspect, the present application relates to a process for the preparation of a concrete structure comprising the steps of (a) casting a layer of fresh concrete, (b) application of a waterbased curable resin system onto the wet cast concrete layer and (c) mechanical incorporation of the applied waterbased curable resin system into the concrete layer, wherein the waterbased curable resin system is a waterbased epoxy resin system and the water content of the waterbased epoxy resin system is in the range of 40 to 80 wt.-%.

In comparison to prior art techniques, the waterbased curable resin system can be applied onto the wet concrete after a comparatively short time after the concrete has been casted, so that it is not necessary and even counter-productive to wait until the concrete is fully hardened.

It has unexpectedly been discovered, that the mechanical incorporation of the waterbased curable resin system into the not fully hardened concrete layer improves the peel strength of a subsequently applied coating significantly. Compared to normal priming of a fully cured and shot blasted concrete surface with a coating composition such as an epoxy coating , the process provides a comparable bonding at a much shorter processing time, which is typically less than 24 hours compared to weeks in the regular process. In addition, due to the smoothness of the surface compared to shot blasted concrete, less of the subsequently applied coating is necessary in the inventive process.

Compared to early impregnation, the concrete can be power-floated and therefore becomes smoother without deteriorating the bonding of the following coating layer applied thereon. In addition, it is not necessary to broadcast the applied curable resin system with sand. In the inventive process bonding is not dependent on the suction effect so that the right timing and conditions during the application are not as critical as it used to be. The possibility of mistakes is significantly reduced and there is a much better reliability of the process in providing tough bonded coatings.

The use of the waterbased curable resin system in the inventive process enables the waterbased curable resin to be mechanically incorporated into the surface of the concrete with a trowelling machine during the setting time of the concrete without sticking to the trowelling machine. This process can be performed in a broad application window, starting as soon as the concrete is walkable until the end of the setting time of the concrete. In this time period a concrete floor is often anyway treated with a trowelling machine in order to achieve a smooth and compact surface of the concrete.

Accordingly, a second aspect of the present application relates to a concrete structure, which is obtainable by the above described process as well as a method for coating such a structure and the corresponding coated structure wherein the peel strength for removing the cured coating composition from the concrete structure is at least 2 N/mm.

The concrete structure obtained by the inventive process enables the application of a coating composition, particularly an epoxy resin composition, typically a so called epoxy primer, which is the first layer of an epoxy resin flooring system, at a very early stage after casting of the concrete and provides good and reliable results for adhesion, in particular with regard to peel strength.

The inventive process is particularly suited for producing seals or coatings, more particularly floor coatings or floor seals, and allows for the production of coated concrete surfaces with strong resistance of the coating and the underlying surface against both horizontal and vertical forces.

Preferred embodiments of the process are reproduced in the dependent claims.

The invention is elucidated comprehensively below.

### Detailed description of the invention

The term "concrete" in this application is understood as a building material, which is formed as a dispersion by addition of a liquid, typically water, to a hydraulic inorganic binder, usually cement, and aggregates, such as sand and/or gravel, and optionally additives such as fillers or admixtures, which in the following hardens to a solid material. Thus, concrete also encompasses building materials such as mortars or cement screed.

A "fresh" concrete is a concrete which has been mixed with water, and which has a form suitable for casting, i.e. it is still in liquid or pasty state.

A concrete is called "wet" during its setting time, determined by the Vicat needle method as described in ASTM C-191.

A concrete is called "walkable" when it is set (hardened) to the point where the shoe marks of a person with a weight of 80 kg walking over the concrete surface are not deeper than 5 mm.

The term "cement" includes Portland cement and other hydraulic cements, such as calcium aluminate cement or calcium sulfoaluminate cement or binary or ternary mixes of the afore mentioned binders with calcium sulfate.

The term "waterbased" in relation to a curable resin system preferably refers to a water content of at least 20 weight-% based on the total curable resin system.

Substance names that begin with "poly", such as polyamine or polyepoxide, refer in the present document to substances formally containing two or more functional groups per molecule going by this name.

Accordingly, in the present document a "polyamine" is understood to be compounds containing two or more amino groups.

The step (a) of the inventive process is casting a layer of fresh concrete. This can be done by any suitable method known in building industry. Preferably the layer of fresh concrete is placed horizontally or slightly inclined. Preferably it is suitable to form the base of a floor upon hardening.

The fresh concrete can be any type of cementitious system. Typically it contains at least one cement and at least one mineral filler.

A preferred cement is a CEM I or a CEM II Portland cement according to DIN EN 197-1, or a Portland cement according to ASTM C150.

Another preferred cement is a calcium aluminate cement or a calcium sulfoaluminate cement, optionally in combination with a calcium sulfate and/or Portland cement. They feature short setting time and high early strength.

Besides cement, the fresh concrete may preferably further comprise so called supplementary cementitious materials (SMC). These are materials which can react with calcium hydroxide and water to form compounds with cementitious properties. Preferred examples of SMC are fly ash, slag, metakaolin, pozzolans or silica fume.

Preferably the mineral filler is selected from the group consisting of quartz flour, quartz sand, gravel, limestone sand, river sand, calcium carbonate, chalk, baryte, dolomite, wollastonite, talc, titanium dioxide and combinations thereof.

Particularly preferred mineral fillers are quartz flour, quartz sand, gravel, calcium carbonate or chalk.

The fresh concrete may preferably further comprise other mineral materials which can react with water, particularly calcium sulfate.

When a cementitious material is mixed with water, a chemical curing process is started which leads to the hardening of the material. This curing process can be surveilled by the so called Vicat needle method as described in ASTM C-191. As long as the Vicat needle feels hardly any resistance when being pressed into the material, this is called "fresh concrete". At this stage the concrete is in a fluid, castable state. The physical hardening of the concrete is called "setting". The moment, when the Vicat needle starts to feel a resistance, but can still penetrate into the concrete, is called "start of the setting time". The moment, when the Vicat needle can't penetrate into the concrete anymore, is called "end of the setting time". Some time after the start of the setting time, a horizontally placed concrete surface starts to be walkable.

In the time period between "walkable" and end of setting time, a concrete floor is often being treated with a so called trowelling process, in which the surface of the setting concrete floor is being mechanically treated by a plate and/or blade trowelling machine. This surface treatment delays the setting of the topmost part of the surface by crushing the freshly formed crystals on the surface and enables the formation of a more compact and smoother surface of the hardened concrete. Typically, the trowelling process is started with a first step of plate trowelling, which provides a flat but still rough surface. At the end of the trowelling process, when the end of the setting time is near, a step of blade trowelling can be performed, which results in a very smooth and compact surface. Typically, the trowelling process is done in several steps (cycles), until the end of the setting time is near or reached. When a concrete with a long setting time is used, the trowelling steps are done in longer time intervals than with a concrete with a short setting time.

Preferred is the use of a concrete mainly based on Portland cement. Such a concrete is inexpensive, easy to use and has a comparatively long setting time.

Further preferred is the use of a concrete based on a ternary binder system containing Portland cement, calcium aluminate cement and calcium sulfate. Such a concrete has a fast setting time and generally provides better adhesion to a coating system. Such materials are e.g. commercialized by Sika under the trade name SikaScreed^{®} HardTop-60 or HardTop-65.

The step (b) of the inventive process is the application of a waterbased curable resin system onto the wet cast concrete layer. It is applied onto the wet cast concrete layer at a stage, where the concrete layer has started setting, but is still wet and has not fully hardened. Preferably, the concrete is in a walkable state, when the process called trowelling is normally started for monolithic concrete slabs.

A wet concrete layer designed to form the base of a floor is typically mechanically treated and smoothened. This procedure is called trowelling and typically comprises several steps (cycles) of plate and/or blade trowelling to delay the setting of the concrete on the surface. At this walkable but on the surface still mechanically treatable stage of the concrete, the waterbased curable resin system is applied onto the wet cast concrete layer, followed by being mechanically incorporated into the concrete layer, particularly as part of a trowelling process, to obtain a concrete structure with the incorporated resin system not only on the surface, but within the top few millimetres of the concrete, to enable sufficient bonding of a coating system applied to this resin-modified concrete.

In the experiments underlying the present application, it has been found, that application and incorporation of the waterbased curable resin system is preferably done within 1 to 20 h after casting the concrete layer, dependable on the setting time of the concrete. Therefore, it is preferred that the waterbased curable resin system is applied onto and mechanically incorporated into the wet concrete layer within 1 to 20 h, depending on the temperature and the setting time of the concrete, after casting the concrete layer. For a temperature of 20°C a preferred application and mechanical incorporation time of 1 to 8 h can be mentioned.

Preferably, the waterbased curable resin system is applied onto and mechanically incorporated into the concrete layer in the time period between the start and the end of the setting time of the concrete according to the Vicat needle method as described in ASTM C-191 after the concrete is walkable. This time period is shorter for a fast setting concrete and longer for a slower setting concrete. At this stage, the applied concrete is preferably humid, but essentially free of bleeding water. Preferably, it is free of bleeding water.

More preferably, the waterbased curable resin system is applied during the trowelling process of a concrete floor within the start and the end of the setting time of the concrete according to the Vicat needle method as described in ASTM C-191 after the concrete is walkable. In this way, the mechanical incorporation doesn't mean an additional step in the preparation of the concrete structure, but is done anyway to obtain a high quality floor and achieve a high adhesion of a coating applied thereon, such that the coating can't easily be peeled off the concrete surface.

The application of the waterbased curable resin system and setting of the cement take place advantageously at a temperature in the range of from 5 to 40°C.

In the investigations underlying the present invention, it has been found that water, which is formulated with the curable resin system, provides for improved workability of the curable resin system into the concrete layer and does not negatively affect the strength of the top layer of the cast concrete. In this regard, it has been observed that a higher water-content provides a good workability of the curable resin system, which allows intimate mixing and coupling of the curable resin system into the wet cast concrete layer, so that the obtained surface layer of resin-modified concrete enables a high peel strength for a thereon applied coating composition.

The waterbased curable resin system is preferably a stable suspension, emulsion or dispersion in water, or the water is emulsified in the resin system and forms a stable emulsion.

The water content of the waterbased curable resin system is at least 40 wt.-% and particularly at least 50 wt.-%. On the other hand, the water content of the of the waterbased curable resin system does not exceed 80 wt.-%, to ensure that a reasonable amount of curable resin system can be applied to the cast concrete layer.

The waterbased curable resin system is a waterbased epoxy resin system. Such a system enables particularly high adhesion forces.

As a particularly preferred water content of a waterbased epoxy resin system is in the range 50 to 80 wt.-%. If the waterbased epoxy resin system is a two component epoxy resin system as described below, the water can be present in the epoxy component (A) or in the curing component (B) or in both, the latter of which is preferred. Furthermore, a portion of the water may also be added separately as a standalone component.

The waterbased curable resin system is an epoxy resin system, which comprises at least one epoxy resin. Epoxy resins are polyepoxides, i.e. compounds having two or more epoxide groups. In addition to at least one epoxy resin a reactive diluent can also be present in the epoxy resin system. Reactive diluents are mono- or polyepoxides with a lower viscosity than that of the epoxy resin used.

For the type of the epoxy resin system, there are no relevant restrictions, i.e. it is possible to use a one-component composition as well as a two-component composition. However, from the perspective of easiness of preparation and handling, two component compositions having an epoxy component (A) and a curing component (B) are preferred. Particularly preferred is a curing component (B), which comprises an amine curing agent.

The epoxy component (A) may comprise one epoxy resin or a mixture of two or more epoxy resins. Preferably, the epoxy component (A) comprises at least one epoxy resin and optionally a reactive diluent. The epoxy component (A) is more preferably a liquid component. It may be viscous, but is generally pourable. Epoxy resins which may be used are all epoxy resins customary within epoxy chemistry.

Epoxy resins may be prepared, for example, in a known way from the oxidation of the corresponding olefins or from the reaction of epichlorohydrin with the corresponding polyols or polyphenols.

Epoxy resins can be divided into liquid epoxy resins and solid epoxy resins. The epoxy resin may have an epoxy equivalent weight, for example, of 156 to 500 g/eq. The epoxy resin is preferably a liquid epoxy resin. The epoxy resin is preferably a diepoxide.

The epoxy resin is further preferably an aromatic epoxy resin, particularly a diglycidyl ether of bisphenol A, bisphenol F or bisphenol A/F. Liquid epoxy resins of this kind are available commercially, as for example under the trade names Araldite^{®} from Huntsman, D.E.R.^{®} from Dow, Epikote^{®} from Momentive, Epalloy^{®} from CVC, Chem Res^{®} from Cognis or Beckopox^{®} from Allnex.

Further suitable aromatic epoxy resins are the products of glycidylization of:
- dihydroxybenzene derivatives such as resorcinol, hydroquinone, and pyrocatechol;
- other bisphenols or polyphenols such as bis(4-hydroxy-3-methylphenyl)-methane, 2,2-bis(4-hydroxy-3-methylyphenyl)propane (bisphenol-C), bis(3,5-dimethyl-4-hydroxyphenyl)methane, 2,2-bis(3,5-dimethyl-4-hydroxyphenyl)propane, 2,2-bis(3,5-dibromo-4-hydroxypheny)propane, 2,2-bis(4-hydroxy-3-tert-butylphenyl)propane, 2,2-bis(4-hydroxyphenyl)-butane (bisphenol-B), 3,3-bis(4-hydroxyphenyl)pentane, 3,4-bis(4-hydroxyphenyl)hexane, 4,4-bis(4-hydroxyphenyl)heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol-Z), 1,1-bis(4-hydroxyphenyl)-3,3,5-trimethylcyclohexane (bisphenol-TMC), 1,1-bis(4-hydroxyphenyl)-1-phenylethane, 1,4-bis[2-(4-hydroxyphenyl)-2-propyl]-benzene (bisphenol-P), 1,3-bis[2-(4-hydroxyphenyl)-2-propyl]benzene (bisphenol-M), 4,4'-dihydroxybiphenyl (DOD), 4,4'-dihydroxybenzophenone, bis-(2-hydroxynaphth-1-yl)methane, bis(4-hydroxynaphth-1-yl)-methane, 1,5-dihydroxynaphthalene, tris(4-hydroxyphenyl)methane, 1,1,2,2-tetrakis(4-hydroxyphenyl)ethane, bis(4-hydroxyphenyl)ether, bis(4-hydroxyphenyl)sulfone;

- condensation products of phenols with formaldehyde, obtained under acidic conditions, such as phenol novolaks or cresol novolaks;
- aromatic amines, such as aniline, toluene, 4-aminophenol, 4,4'-methylenediphenyldiamine (MDA), 4,4'-methylenediphenyldi-(N-methyl)amine, 4,4'-[1,4-phenylene-bis(1-methylethylidene)]bisaniline (bisaniline-P), 4,4'-[1,3-phenylene-bis(1-methylethylidene)]bisaniline (bisaniline-M).

In a further embodiment, the epoxy resin may be an aliphatic or cycloaliphatic epoxy resin, such as, for example
- diglycidyl ether;
- a glycidyl ether of a saturated or unsaturated, branched or unbranched, cyclic or open-chain C2 to C30 diol, such as ethylene glycol, propylene glycol, butylene glycol, hexanediol, octanediol, a polypropylene glycol, dimethylolcyclohexane, neopentyl glycol, for example;
- a glycidyl ether of a tri- or tetrafunctional, saturated or unsaturated, branched or unbranched, cyclic or open-chain polyol such as castor oil, trimethylolpropane, trimethylolethane, pentaerythritol, sorbitol, or glycerol, and also alkoxylated glycerol or alkoxylated trimethylolpropane;
- a hydrogenated liquid bisphenol A, F or A/F resin, and/or the products of glycidylization of hydrogenated bisphenol A, F or -A/F;
- an N-glycidyl derivative of amides or heterocyclic nitrogen bases, such as triglycidyl cyanurate and triglycidyl isocyanurate, and also reaction products of epichlorohydrin and hydantoin.

Further examples of epoxy resins that can be used are epoxy resins prepared from the oxidation of olefins, as for example from the oxidation of vinylcyclohexene, dicyclopentadiene, cyclohexadiene, cyclododecadiene, cyclododecatriene, isoprene, 1,5-hexadiene, butadiene, polybutadiene or divinylbenzene.

Preferred as epoxy resin are liquid bisphenol A, F or A/F based resins, of the kind available commercially, for example, from Dow, Huntsman and Momentive. Particularly preferred epoxy resins are diglycidyl ethers of bisphenol A, bisphenol F or bisphenol A/F. Such an epoxy resin can be used alone or in combination with other epoxy resins and/or with one or more reactive diluent.

Suitable reactive diluents are glycidylethers of mono- or polyhydric phenols or aliphatic or cycloaliphatic alcohols, such as, in particular, the polyglycidyl ethers of diols or polyols, already stated as aliphatic or cycloaliphatic epoxy resins, or in particular phenyl glycidyl ether, cresyl glycidyl ether, p-n-butylphenyl glycidyl ether, p-tert-butylphenyl glycidyl ether, nonylphenyl glycidyl ether, allyl glycidyl ether, butyl glycidyl ether, hexyl glycidyl ether, 2-ethylhexyl glycidyl ether, and also glycidyl ethers of natural alcohols, such as, for example, C8 to C10 alkyl glycidyl ethers, C12 to C14 alkyl glycidyl ethers, or C13 to C15 alkyl glycidyl ethers, commercially available as Erisys^{®} GE-7, Erisys^{®} GE-8 (from CVC), or as Epilox^{®} P 13 - 19 (from Leuna).

The epoxy component (A) may be non-aqueous. In a preferred embodiment the epoxy component (A) contains water. Preferably it is an aqueous epoxy component (A), which is an emulsion, suspension or dispersion containing the epoxy resin and optionally a reactive diluent in water. The water content is preferably in the range of 20 to 60 wt.-% and more preferably in the range of 30 to 50 wt.-%. Preferably it contains additionally at least one emulsifier.

A suitable commercial aqueous epoxy component (A) is preferably Sika^{®} Repair/Sikafloor^{®} EpoCem^{®} Modul A (from Sika), Araldite^{®} PZ 323, Araldite^{®} PZ 756/67, Araldite^{®} PZ 3961 (from Huntsman), XZ 92598.00, XZ 92546.00, XZ 92533.00 (from Dow), Waterpoxy^{®} 1422, Waterpoxy^{®} 1455 (from Cognis), Beckopox^{®} 623w, Beckopox^{®} EP 384w, Beckopox^{®} EP 385w, Beckopox^{®} EP 386w, Beckopox^{®} EP 2340w, Beckopox^{®} VEP 2381w (from Allnex).

It is also possible to use a so called emulsifiable epoxy resin, which typically comprises at least one emulsifier. Suitable commercial emulsifiable epoxy resins are particularly Araldite^{®} PY 340 or Araldite^{®} PY 340-2 (from Huntsman), Beckopox^{®} 122w or Beckopox^{®} EP 147w (from Allnex).

The epoxy component (A) may optionally comprise one or more other additives. Suitable additives are elucidated further below.

The curing component (B) comprises at least one amine with at least 2, preferably at least 3, more preferably at least 4, amine hydrogens. Preferably the curing component is liquid. It can contain water or not. Preferably it contains water. More preferably it is a so called aqueous or waterbased curing component (B) which is preferably an emulsion.

The amine compound may be any amine compound commonly used in the art as hardener for epoxy resins. Such amine hardeners are available commercially. It contains at least one amine with at least 2 amine hydrogens. Typically it contains a mixture of two or more amines. Typically at least one of these amines contain primary amino groups.

Preferred amine curing agents contain a polyamine, a polyaminoamide, a polyamine-polyepoxide adduct or a mixture of at least two of these compounds. It is possible that the amino groups are present in blocked form, although this is not preferred.

Preferred are aliphatic polyamines, such as diethylenetriamine, triethylenetetramine, dipropylenetriamine, tetraethylenepentamine, 3-aminomethyl-3,5,5-trimethylcyclohexylamine (IPDA), m-xylylenediamine (MXDA), polyoxypropylene-diamines, cycloaliphatic and/or heterocyclic polyamines, such as 4,4'-diamino-3,3'-dimethyldicyclohexylamine, cyclohexylaminopropylamine, N-aminoethylpiperazine, polyaminoamides, obtainable for example from a dimer fatty acid and a polyamine, such as ethylenediamine, for example, or polyaminoimidazolines. Preferred are also adducts of these amines with mono- or particularly with diepoxides. Examples of blocked amine compounds are, for example, polyketimines, obtained by reaction of polyamines with ketones, or cyanoethylated polyamines from the reaction of polyamines with acrylonitrile, such as dicyandiamide in unmodified or modified form.

Preferably, the curing component (B) contains water. More preferably, it contains water in an amount of 20 to 95 wt-%, even more preferably in an amountof 40 to 90 wt.-%, and particularly in an amount of 50 to 90 wt.-%. Such curing component (B) is also called aqueous or waterbased amine hardener. Particularly preferred are commercial aqueous amine hardeners for self-leveling waterbased epoxy resin systems, such as Sika^{®} Repair/Sikafloor^{®} EpoCem^{®} Modul B (from Sika), Beckopox^{®} EH 623w/80WA or Beckocure^{®} EH 2100w/44WA (both from Allnex), Epilink^{®} 701 (from Evonik), Incorez^{®} 148/700 (from Incorez) or D.E.H.^{®} 804 (from Dow).

The proportion of the epoxy component (A) relative to the curing component (B) is regularly chosen such that the ratio of amine hydrogens (NH) from the curing component to the epoxide groups from the epoxy component in the resulting mixture are within in the range of 0.5 to 1.5, preferably 0.7 to 1.3 and more preferably in the range of 0.8 to 1.2.

The epoxide equivalent weight can be determined according to DIN 53188 and is reported in g/eq. The NH equivalent weight can be determined according to DIN 16945 and is reported in g/eq.

Both the epoxy component (A) and the curing component (B) may contain further additives. Suitable are additives customarily used within this field, such as particularly nonreactive diluents such as benzylic alcohol or diisopropylnaphthalene, solvents, film-forming additives, reactive diluents or extenders, particularly the already mentioned diluents containing epoxide groups, thermoplastic polymers, inorganic or organic fillers, such as ground or precipitated calcium carbonates, barite, talcs, finely ground quartzes, silica sand, dolomites, wollastonites, kaolins, micas, aluminum oxides, aluminum hydroxides, silicas, PVC powders, or hollow beads, for example, fibers, accelerators for the reaction of the epoxide groups, examples being acids such as salicylic acid or compounds that can be hydrolyzed to acids, tertiary amines such as tris(dimethylaminomethyl)phenol, or salts thereof, quaternary ammonium salts, rheology modifiers, such as thickeners, for example, adhesion promoters, such as organoalkoxysilanes, for example, stabilizers to counter heat, light or UV radiation, flame retardants, surface-active substances, such as wetting agents, flow control agents, deaerating agents, or defoamers, for example, or biocides.

As other additives are concerned the content thereof is preferably limited to the amount required for the indicated purpose. Preferably the waterbased curable resin system does not contain more than 10 wt.-%, more preferably not more than 5 wt.-%, of additives, wherein water and solvents are not considered as additives for this calculation.

The waterbased curable resin system can also comprise hydraulic inorganic binders. However, it is not preferred that it comprises hydraulic inorganic binders.

Therefore, in a preferred embodiment, the waterbased curable resin system does not comprise substantial quantities of free hydraulic inorganic binders, preferably no quantities in excess of 5 wt.-%, more preferably not in excess of 2 wt.-%, even more preferably, not in excess of 1 wt.-%, and most preferably no added free hydraulic inorganic binders.

In the inventive process, the waterbased curable resin system is applied onto the wet cast concrete layer in an amount sufficient to provide adequate bonding of a subsequently applied coating composition. Preferably, it is applied in an amount of 0.1 to 0.4 kg/m² and more preferably 0.12 to 0.3 kg/m². Calculated on a dry basis, it is preferably applied in an amount of 10 to 150 g/m², preferably 10 to 100 g/m², more preferably 20 to 80 g/m² and most preferably 30 to 80 g/m² onto the wet cast concrete layer.

A multi component curable resin system, for example a two component epoxy resin system, is mixed with a suitable method in a suitable mixing ratio of the components. After sufficient mixing, the resin system is ready for being applied.

For the application of the waterbased curable resin system onto the wet cast concrete layer, there are no significant restrictions. In a preferred embodiment, the waterbased curable resin system is applied by spray application.

In step (c) of the inventive process, the applied waterbased curable resin system is mechanically incorporated into the concrete layer.

The term "mechanical incorporation" designates a mechanical treatment of the surface of the wet cast concrete, by which the waterbased curable resin system is at least partially mixed with and incorporated into the topmost area of the cast concrete. The mechanical incorporation regularly involves deterioration of crystallites in the concrete which form during the setting process, whereby the topmost surface is densified and the waterbased curable resin system is intimately admixed with the concrete to form a surface layer of resin-modified concrete.

Concerning the means to incorporate the waterbased curable resin system into the concrete layer, there are no relevant restrictions, i.e. the incorporation can be performed with a rotating brush or a manual brush or other suitable equipment. However, in a preferred embodiment of the invention, the incorporation of the waterbased curable resin system into the concrete layer is accomplished by using trowelling (power floating) and in particular plate and/or blade trowelling. Trowelling is a technique frequently used for compacting and smoothing cast cementitious surfaces, wherein the partially cured cementitious surface is treated with levelling means. As a result of this treatment, the upper surface of the cement is softened and smoothed to produce a smoothened surface. The preparation of large smooth cementitious surfaces is preferably executed with a power trowel machine, which sweeps over the surface with rotating plates or blades.

In a regular trowelling process for preparing very smooth surfaces, there is a first trowelling stage with a plate troweller and a subsequent trowelling stage with a blade troweller, where both the plate and blade trowelling can be executed more than once to smoothen and densify the cast surface.

In the practice of the present application, the mechanical incorporation of the waterbased curable resin system into the concrete layer is preferably accomplished by using a plate and/or blade trowelling and more preferably is accomplished by using a first stage of plate trowelling and a subsequent stage of blade trowelling. The trowelling in this case is preferably accomplished with a power trowel machine.

Preferably the mechanical incorporation of the waterbased curable resin system into the concrete layer is executed by using at least one cycle of plate trowelling, optionally followed by at least one cycle of blade trowelling. If more than one trowelling step for the mechanical incorporation of the waterbased curable resin system into the concrete is executed, the further trowelling steps take place within a period of 15 to 120 min after the first step of trowelling, more preferably about 30 to 90 min and even more preferably about 40 to about 80 min, mainly depending on the setting time of the concrete.

Most preferably, the mechanical incorporation of the applied waterbased curable resin system into the concrete layer is executed by a mechanically operated machine with a horizontally rotating plate or with horizontally rotating blades sweeping over the surface of the setting concrete with the waterbased curable resin system applied thereon, thus mixing up the topmost layer of the concrete and incorporating the waterbased curable resin system. Such a machine is called a trowelling machine or power trowel or power float. They are typically powered by electricity, gasoline or diesel. Typically used are ride-on power trowels controlled by an operator sitting on a seat upon the machinery, or walk-behind power trowels controlled by an operator walking behind the machine.

In a further aspect, the present invention concerns the concrete structure, which is obtainable or obtained by the process as described herein-before, wherein the concrete structure contains a base layer of concrete and a surface layer of resin-modified concrete. The base layer of concrete and the surface layer of resin-modified concrete typically merge into each other and the layer of resin-modified concrete has a thickness in the range of about 1 to about 10 millimetres, preferably 1 to 3 mm.

A significant advantage of such a concrete structure is that it can easily be prepared in a short time and can be overcoated after a very short time, e.g. with a curable coating composition, particularly with an epoxy primer such as Sikafloor^{®}-156 or Sikafloor^{®}-161 (from Sika). In the build up of a flooring system, this process saves a lot of time between casting of the concrete and application of the curable coating system. The time period, within which such a concrete structure can be overcoated and develops a high peel strength, is particularly large. This enables an easy process for large building sites.

As indicated above, the key purpose of incorporating the waterbased curable resin system into the wet cast concrete layer is to impart good bonding of the thus treated cast cementitious layer to a subsequent coating of a coating composition applied onto the treated surface. Thus, in the practice of the present application, it is preferred that the above-described process comprises a further step of applying a layer of coating composition onto the concrete layer with the incorporated resin system. As suitable coating compositions for this coating, epoxy compositions can be mentioned, but the application of coating compositions based on other chemistries, such as polyurethane coatings or polyurea coatings, is envisaged as well. Preferred for application onto the resin system treated concrete surfaces are epoxy compositions, particularly an epoxy primer as base coat of a flooring system.

In particular, the present invention concerns a method for coating comprising the steps of
(i) providing a concrete structure with the process as described above,
(ii) applying a coating composition, preferably an epoxy resin composition, onto the concrete structure,
(iii) curing the coating composition.

Optionally, it is possible that the method further involves a step (iv) of applying at least one further layer of a coating composition, wherein the coating composition of the further layer may be from the same or a different material than the coating composition, which has been applied in step (ii).

The time between the preparation of the concrete structure in step (i) of the above method and the application can be short, i.e. depending on the hardening speed of the concrete, an application after about 8 h or more, even after 40 h or more, is possible, whereas for fast curing concrete, an application after about 4 h up to 40 h and more is possible. For later application of the coating composition there is no limit as long as the peel strength obtained thereafter is sufficient.

Preferably, the waiting time between the end of the setting time of the concrete and the application of the coating composition of step (ii) can be varied in the range of 15 min to 3 days, preferably 30 min to 55 hours.

Suitable coating compositions are any curable coating compositions, which can be applied in liquid state onto a well-prepared concrete surface and cure to form a floor. Particularly suitable are polyurethane or polyurea compositions or epoxy resin compositions. Such compositions can be cured by moisture or they can comprise two components and cure upon mixing of the components. Suitable coating compositions are available from Sika under the trade name Sikafloor^{®}. Typically they are used in more than one layer such as base coat, top coat and/or roller coat, which can be identical or different products.

A particularly suitable coating composition for the application in step (ii) is an epoxy resin composition, which is suitable as the base layer of an epoxy resin floor or a polyurethane or polyurea based flooring system. Such a base layer is also called a "primer". A particularly useful base layer is Sikafloor^{®}-161 or Sikafloor^{®}-156, which are unfilled epoxy resin based coating compositions (epoxy-primers) for the base layer of a flooring system (from Sika).

A particularly preferred further layer of a coating composition for step (iv) is a highly pigmented epoxy resin composition such as Sikafloor^{®}-264, Sikafloor^{®}-264N or Sikafloor^{®}-2600 (from Sika).

For the thickness of the coating composition to be applied, there are no relevant restrictions with the exception that the amount of coating composition to be coated should be sufficient and adequate for the desired purpose. In the regular case, however, the coating composition will be applied in an amount to provide a thickness of the cured coating in the range of 0,1 to 2 mm, and preferably in the range of 0,1 to 1 mm and more preferably in the range of 0,1 to 0,5 mm. Further coating compositions are applied thereon according to the technical needs of the further build-up of a complete flooring system.

In a yet further aspect, the present invention concerns a coated structure obtainable or obtained by the aforementioned method for coating. Preferably, the peel strength for removing the coating composition from the concrete structure is at least 2 N/mm, preferably at least 5 N/mm and more preferably in the range of 6 to 18 N/mm. The peel strength is thereby determined as described in the examples. Regularly, the coated structure has a concrete layer containing the resin-modified concrete on the top and at least one coating layer obtained by the method described above.

Most preferred is a peel strength of more than 3 N/mm, particularly more than 4 N/mm, which shows cohesive failure in the concrete structure in at least 50% of the peeled area.

In a particularly preferred embodiment, the coated structure is in the form of a floor, e.g. a floor in industrial buildings, infrastructure construction such as bridges and tunnels, public buildings such as parking garages, as well as residential buildings. However, it is also possible to use the inventive process for the construction of a wall, which is supposed to be coated by a coating composition. This is particularly preferred for concrete walls, which are erected by slipform method or which have to be repaired with mortars and afterwards be protected with a coating, for example in silos, tanks, basements or tunnels.

The inventive process enables the build up of a coated floor (or wall) with good peel strength within an extremely short time. The mechanical incorporation of the waterbased curable resin system into the still wet concrete as part of the trowelling process enables a big increase of the peel strength with cohesive failure of the coated surface compared to a coated surface prepared without use of the waterbased curable resin system or to a simple spray application of a curable resin system onto the concrete surface without mechanical incorporation.

In the following, the invention will further be illustrated by means of examples, which however should not be understood as limitative to the invention.

### Examples

The **peel strength** was determined according to the following test:
Test specimens of 25 x 110 mm were cut from the coated concrete structures obtained as described in the examples. A rectangular steel L-profile with a width of 25 mm and a thickness of 0.5 mm was glued onto the coating of the thus prepared test specimens in such a way, that the edge of the profile was placed flush with the front of the test specimen, the length of the bonded part was 80 mm and the length of the outstanding part was 60 mm. The thus prepared samples were then fixed in an Instron 3365 test apparatus by the end of the outstanding part of the L-profile and the bonded part of the L-profile was pulled from the test specimen at a speed of 0.3 mm/min perpendicular to the coating. The tensile force is recorded as a function of the tensile length. After an initial force peek, an almost constant force (peel adhesion) was measured over a length of 20 to 40 mm and the average force over this distance is calculated. The thus obtained data is evaluated with Bluehill 3 software.

In the following, the mode of failure in the peel tests is indicated as "af" for "adhesive failure" between concrete structure and coating composition or "cf" for "cohesive failure" in the concrete structure; the given amounts in mm indicates the depth of the failure within the concrete structure.

The **adhesive strength** (tensile adhesive strength) was determined by glueing a steel cylinder with a diameter of 50 mm onto the coated surface by means of an adhesive, followed by drawing off the steel cylinder from the coated surface in an Instron 3365 test apparatus at a speed of 100 N/min and determination of the maximum force.

### Example 1

A mixture of 335 kg/m³ Portland cement, 50 kg/m³ limestone filler, 3 kg/m³ superplasticizer, 1093 kg/m³ sand 0/4 (BSL), 336 kg/m³ gravel 4/8 (BSL), 444 kg/m³ gravel 8/16 (BSL) and 176 water with a w/c-ratio of 0.525 was prepared and cast to provide a substantially flat surface of a thickness of approximately 30 mm (= concrete 1).

As comparative samples, test specimens (samples 1 and 2) were prepared without application of a waterbased curable resin system, wherein the cast test specimen were trowelled after 4 h and 5 h with a plate. Sample 1 was additionally trowelled after 6 h, 7 h, and 8 h with blades. After 9:25 h 450 g/m² of Sikafloor^{®}-161 (coating composition based on epoxy resin, from Sika) was applied onto the thus prepared surface by roller.

The inventive samples 3 and 4 were prepared by subjecting the cast concrete surface to a first plate trowelling step after about 4 h, applying the respective waterbased curable resin system thereon after about 4:20 h by spray application followed by trowelling it into the surface of the concrete layer after about 4:40 h and again after about 6:20 h with a plate and further after about 7 h and after about 8 h with a blade. After about 9:15 h 450 g/m² of Sikafloor^{®}-161 was applied onto the thus prepared surface by roller.

As waterbased curable resin system, a waterbased epoxy composition **WE-1,** which is Sikafloor^{®} EpoCem^{®} Modul Component A (aqueous emulsion containing bisphenol A/F digylcidylether, C₁₂₋₁₄-glycidylether and 37 weight-% water, from Sika ) and Sikafloor^{®} EpoCem^{®} Modul Component B (waterbased amine, from Sika; 18 weight-% in water) in an A:B mixing ratio of 1 : 2.5 (weight); or a waterbased epoxy composition **WE-2,** which is Sikafloor^{®} EpoCem^{®} Modul Component A and Beckopox^{®} EH 623w/80WA (waterbased amine, from Allnex; diluted to 17 weight-% in water) in an A:B mixing ratio of 1 : 3.24 (weight), was used.

24h after the application of Sikafloor^{®}-161, each sample was overcoated with Sikafloor^{®}-2600 (filled epoxy resin composition, from Sika) with added quartz sand 0.1 to 0.3 mm in a quantity of 1.8 kg/m² Sikafloor^{®}-2600 and 1 kg/m² sand. This gave a layer thickness of 2 to 2.5 mm.

The thus prepared coated structures were investigated for their peel strength and adhesive strength properties after a curing time of 14 days at 23 °C / 50% relative humidity. The amounts of the applied resin system and coating composition as well as the test results are reported in table 1 below. The samples designated with (ref.) are reference samples.

**Table 1**

| Sample No. | Substrate | Surface Treatment | Waterbased curable resin system | Amount of waterbased curable resin system [g/m²] | Amount of Sikafloor^{®}-161 [g/m²] | Peel strength [N/mm]* | Mode of failure in peel-test | Adhesive strength [N/mm]* |
|---|---|---|---|---|---|---|---|---|
| **1 (ref.)** | concrete 1 | blade (smooth) | no | 0 | 450 | 1.17 | 100% af | 2.88 |
| **2 (ref.)** | concrete 1 | plate (rough) | no | 0 | 450 | 1.44 | 100% af | 2.38 |
| **3** | concrete 1 | blade (smooth) | composition **WE-1** | 148 | 450 | 3.10 | 90% af / 10% cf (< 1mm) | 2.93 |
| **4** | concrete 1 | blade (smooth) | composition **WE-2** | 143 | 450 | 4.21 | 85% af / 15% cf (< 1mm) | 3.40 |

| | | | | | | | | |
|---|---|---|---|---|---|---|---|---|
| * = mean from three samples | | | | | | | | |

**Table 2**

| Sample No. | Substrate | Surface Treatment | Waterbased curable resin system | Amount of waterbased curable resin system [g/m²] | Amount of Sikafloor^{®}-161 [g/m²] | Peel strength [N/mm]* | Mode of failure in peel-test | Adhesive strength [N/mm]* |
|---|---|---|---|---|---|---|---|---|
| **5 (ref.)** | HardTop-60 | blade (smooth) | no | 0 | 430 | 4.61 | 85% af /15% cf (< 1mm) | 2.89 |
| **6 (ref.)** | HardTop-60 | plate (rough) | no | 0 | 430 | 5.43 | 65% af / 35% cf (1-2 mm) | 2.95 |
| **7** | HardTop-60 | blade (smooth) | composition **WE-1** | 257 | 470 | 7.45 | 100% cf (0.1 mm) | 2.24 |
| **8** | HardTop-60 | plate (rough) | composition **WE-1** | 257 | 470 | 13.55 | 100% cf (0.2-0.3 mm) | 1.99 |
| **9** | HardTop-60 | blade (smooth) | composition **WE-2** | 221 | 470 | 13.94 | 100% cf (0.3-2 mm) | 2.70 |
| **10** | HardTop-60 | plate (rough) | composition **WE-2** | 221 | 470 | 15.76 | 100% cf (1-3 mm) | 3.30 |

| | | | | | | | | |
|---|---|---|---|---|---|---|---|---|
| * = mean from three samples | | | | | | | | |

### Example 2

In this example, SikaScreed^{®} HardTop-60 (high strength, rapid hardening, floor levelling mortar, from Sika) was used to cast the concrete structure with a thickness of approximately 30 mm onto which the waterbased curable resin system was applied. In contrast to Example 1, a first trowelling with plate was conducted about 1 h after casting (samples 5 - 10). For the comparative sample 5, further blade trowellings were performed after 1:30 h, 2 h and about 2:30 h. Finally, Sikafloor^{®}-161 (430 g/m²) was applied with roller onto the trowelled surface of sample 5 or 6 after about 4 h. For the inventive samples 7 to 10, the waterbased curable resin system given in table 2 was applied after about 1:15 h onto the surface by spray application. Subsequently, the applied resin system was trowelled into the surface by plate trowelling after about 1:30 h. For samples 7 and 9, the surfaces were further subjected to two rounds of blade trowelling after 2 h and 2:30 h. Finally, Sikafloor^{®}-161 (470 g/m²) was applied onto the trowelled surface after about 4 h.

24 h after the application of Sikafloor^{®}-161, each sample was overcoated with Sikafloor^{®}-2600 with added quartz sand in the same way as described for example 1.

The thus prepared coated structures 5 and 6 (comparative) and 7 to 10 (inventive) were investigated for their peel strength and adhesive strength properties after a curing time of 28 days at 23 °C / 50% relative humidity. The amounts of applied resin system and coating composition as well as the test results are reported in table 2. The samples designated with (ref.) are reference samples.

Examples 1 and 2 show the improvement of the peel strength by the use of the mechanically incorporated waterbased curable resin system during the setting of the concrete structure in the trowelling process, whereas the highly improved adhesion is hardly reflected in the results for the adhesive strength.

### Example 3

In this example SikaScreed^{®} HardTop-60 was used to cast the concrete structure with a thickness of approximately 30 mm onto which the waterbased curable resin system was applied. Thereon, waterbased epoxy resin systems having varying water contents were investigated as curing resin system for their workability and final peel strength after being coated. For these investigations, Beckopox^{®} EH623/80WA (from Allnex) was used in differently diluted form (diluted with water as given in table 3) as the curing component (B), together with Sikafloor^{®} EpoCem^{®} Modul Component A (Sika) with a water content of 37 weight-%. Sikafloor^{®}-161 (450 g/m²) was applied onto the trowelled surfaces after about 4 h.

24 h after the application of Sikafloor^{®}-161, each sample was overcoated with Sikafloor^{®}-2600 with added quartz sand in the same way as described for example 1.

The thus prepared coated structures were investigated for their workability and their peel strength properties after a curing time of 14 days at 23 °C / 50% relative humidity.

The compositions and properties of the thus prepared coated structures are provided in the following table 3.

**Table 3**

| | **Sample 11** | **Sample 12** | **Sample 13** | **Sample 14** |
|---|---|---|---|---|
| Curing component of waterbased curable resin system | Beckopox, diluted to a water content of 84 weight-% | Beckopox, diluted to a water content of 76 weight-% | Beckopox, diluted to a water content of 68 weight-% | Beckopox, diluted to a water content of 58 weight-% |
| Mixing ratio¹ | 3.24 | 2.26 | 1.69 | 1.28 |
| Water content A+B ² [weight-%] | 72.9 | 64.0 | 56.5 | 48.8 |
| Application quantity [g/m²]: | 250 | 203 | 170 | 140 |
| Application quantity pure resin [g/m²]: | 68 | 73 | 74 | 72 |
| Application steps:³ | 5 times plate; 1 time blade | 3 times plate; 1 time blade | 3 times plate; 1 time blade | 2 times plate; 1 time blade |
| Trowelling time [min] :⁴ | 70 | 55 | 45 | 30 |
| Workability with the applied resin system for trowelling: | very good, not sticky | a little more sticky compared to sample 11 | more sticky compared to sample 11; trowelling works good | sticky (mortar sticks to trowel and does not provide high smoothness) |
| Average peel strength [N/mm] | 13.94 | 14.05 | 14.33 | 14.45 |
| Mode of failure in peel test | cf | cf | cf | cf |

| | | | | |
|---|---|---|---|---|
| *¹ weight-parts of curing component per 1 weight-part of epoxy component* *² water content of the mixed resin system* *³ The waterbased curable resin system was sprayed after roughly 1 hour onto the walkable surface of HardTop-60 and troweled every 10 to 15min with plate, untill the amount of paste was reduced to switch to blade-trowel and finally smooth the surface.* *⁴ time from first application of the waterbased curable resin system till last trowelling step (cement paste hardened)* | | | | |

Example 3 shows that the water content in the waterbased curable resin system can be varied in a significant range. If the water content with this comparatively high viscous curing component is reduced to less than 50 weight-% however, compositions tend to stick to the trowel.

### Example 4:

In this example SikaScreed^{®} HardTop-60 was used to cast the concrete structure with a thickness of approximately 30 mm onto which the waterbased curable resin system was applied. Thereon, waterbased epoxy resin systems based on various curing components were tested for their workability and final peel strength. Sikafloor^{®}-161 was applied onto the trowelled surfaces after about 4 h.

24 h after the application of Sikafloor^{®}-161, each sample was overcoated with Sikafloor^{®}-2600 with added quartz sand in the same way as described for example 1.

The thus prepared coated structures were investigated for their workability and their peel strength properties after a curing time of 14 days at 23 °C / 50% relative humidity.

The compositions and properties of the thus prepared coated structures are provided in the following table 4.

The example 4 shows that various curing agents can be used for the waterbased curable resin system. A certain amount of water is benefical for the tested systems.

**Table 4**

| | **Sample 15** | **Sample 16** | **Sample 17** | **Sample 18** |
|---|---|---|---|---|
| Epoxy component of waterbased curable resin system | Sikafloor^{®} EpoCem^{®} Modul Component A, water content 37 weight-% | Sikafloor^{®} EpoCem^{®} Modul Component A, water content 37 weight-% | Sikafloor^{®} EpoCem^{®} Modul Component A, water content 37 weight-% | waterfree mixture of bisphenol A/F digylcidylethers and reactive diluent in Diisopropylnaphthalene |
| Curing component of waterbased curable resin system | Beckocure^{®} EH 2100w/44WA (from Allnex) diluted to a water content of 81 weight-% | Beckocure^{®} EH 2100w/44WA (from Allnex) diluted to a water content of 56 weight-% | cashew nut shell liquid based hardner dispersion diluted to a water content of 84 weight-% | mixture of MXDA, IPDA, benzyl alcohol and water diluted to a water content of 91 weight-% |
| Mixing ratio¹ | 4.38 | 1.92 | 2.95 | 3.73 |
| Water content A+B² [weight-%] | 72.8 | 49.5 | 72.1 | 71.8 |
| Application quantity [g/m²]: | 258 | 136 | 245 | 247 |
| Application quantity pure resin [g/m²]: | 70 | 69 | 68 | 70 |
| Application steps:³ | 4 times plate; 1 time blades | 4 times plate; 1 time | 3 times plate; 1 time | 3 times plate; 1 time |
| Trowelling time [min] :⁴ | 60 | 65 | 50 | 40 |
| Workability with the applied resin system for trowelling: | good | very good, less sticky compared to saple 15 | even better than sample 16; not sticky | good (creates foamy paste, foam disappears over time, medium sticky) |
| Average peel strength [N/mm] | 13.55 | 13.98 | 14.08 | 12.56 |
| Mode of failure | cf | cf | cf | cf |

| | | | | |
|---|---|---|---|---|
| *¹ weight-parts of curing component per 1 weight-part of epoxy component* *² water content of the mixed resin system* *³ The waterbased curable resin system was sprayed after roughly 1 hour onto the walkable surface of HardTop-60 and troweled every 10 to 15min with plate, untill the amount of paste was reduced to switch to blade-trowel and finally smooth the surface.* *⁴ time from first application of the waterbased curable resin system till last trowelling step (cement paste hardened)* | | | | |

### Example 5: (reference)

In this comparative example, SikaScreed^{®} HardTop-60 was used to cast the concrete structure with a thickness of approximately 30 mm. Thereon, Sikafloor^{®}-156 (unfilled epoxy resin composition, from Sika), which is not waterbased and essentially free of water, was used as a non-waterbased curable resin system and mechanically incorporated into the concrete structure. The mixing ratio was 0.33 weight-parts of curing component (B) per 1 weight-part of epoxy component (A).

Sikafloor^{®}-156 was applied 1 hour after casting onto the surface of the setting HardTop-60 with a roller in a quantity of 176 g/m², followed by plate trowelling after 15min.

Plate trowelling was not successful, because the non-waterbased curable resin system Sikafloor^{®}-156 sticked to the plate of the trowelling machine to such an extent, that it was not possible to achieve a sufficient smoothening of the concrete structure and proceed with further trowelling steps.

The reference example 5 shows, that a non-waterbased curable resin system is not usable in the inventive trowelling process.

### Example 6:

A mixture of 340 kg/m³ Portland cement, 2 kg/m³ superplasticizer, 823 kg/m³ sand 0/4 (BSL), 280 kg/m³ gravel 4/8 (BSL), 766 kg/m³ gravel 8/16 (BSL) and 181 kg/m³ water with a w/c-ratio of 0.55 was prepared and cast to provide a substantially flat surface with a thickness of approximately 30 mm (= concrete 2).

After 4 hours 45 minutes from casting the concrete structure, the setting of the concrete was in progress. The surface was humid without any bleeding water, showing shoe marks of a person walking over the concrete surface in a depth of about 1 to 3 mm. At this moment, the trowelling process was started with a first plate trowelling step. Further trowelling steps and the application of the waterbased curable resin system specified below were done as indicated in table 5. When the setting of the concrete surface was nearly finished, a last trowelling step using the blade trowelling machine was performed to obtain a very smooth surface texture. After the waiting time given in table 5, Sikafloor^{®}-161 was applied onto the concrete structure.

24 h after the application of Sikafloor^{®}-161, each sample was overcoated with Sikafloor^{®}-2600 with added quartz sand in the same way as described for example 1.

The waterbased curable resin system was the composition **WE-2** as given in example 1 with a total water content of the mixed composition of 72.2 weight-%. It was applied by spray application.

The samples 19, 20 and 21 are inventive samples with mechanical incorporation of the applied waterbased curable resin system into the concrete layer. The sample 22 is a reference example with application of the waterbased curable resin system without mechanical incorporation into the concrete layer. The sample 23 is a reference example without the application of a waterbased curable resin system.

The coated structures thus prepared were investigated for their workability and their peel strength and adhesive strength properties after a curing time of 14 days at 23°C / 50% relative humidity. The compositions and properties are provided in table 5. The samples designated with (ref.) are reference samples.

**Table 5**

| **Sample no.** | **19** | **20** | **21** | **22 (ref.)** | **23 (ref.)** |
|---|---|---|---|---|---|
| Substrate | concrete 2 | concrete 2 | concrete 2 | concrete 2 | concrete 2 |
| Waterbased curable resin system | **WE-2** 230 g/m² | **WE-2** 230 g/m² | **WE-2** 230 g/m² | **WE-2** 100 g/m² | non |
| Surface treatment (time after casting [h:min]) | Plate¹ (4:45) | Plate¹ (4:45) | Plate¹ (4:45) | Plate¹ (4:45) | Plate¹ (4:45) |
| | **WE-2²** (4:55) | **WE-2²** (4:55) | **WE-2²** (4:55) | Plate¹ (5:50) | Plate¹ (5:50) |
| | Plate¹ (5:50) | Plate¹ (5:50) | Plate¹ (5:50) | Plate¹ (7:50) | Plate¹ (7:50) |
| | Plate¹ (7:50) | Plate¹ (7:50) | Plate¹ (7:50) | Blade³ (8:30) | Blade³ (8:30 |
| | Blade³ (10:10) | Blade³ (10:10) | Blade³ (10:10) | **WE-2²** (11:30) | |
| Covered with plastic sheet⁴ [h:min] | no | covered 15:45 | covered 39:45 | no | no |
| Coating system (time after end of trowelling) | Sikafloor^{®}161 150 g/m² (after 1h) | Sikafloor^{®}161 150 g/m² (after 16h) | Sikafloor^{®}161 150 g/m² (after 40h) | Sikafloor^{®}161 150 g/m² (after 5h) | Sikafloor^{®}161 150 g/m² (after 3h) |
| further layer of coating | Sikafloor^{®}-2600 | Sikafloor^{®}-2600 | Sikafloor^{®}-2600 | Sikafloor^{®}-2600 | Sikafloor^{®}-2600 |
| Peel strength [N/mm] | 8.9 | 5.9 | 6.2 | 1.7 | 0.7 |
| Mode of failure in peel test | 100% cf (1-2mm) | 100% cf (0.5-1mm) | 100% cf (0.5-1mm) | 100% af | 100% af |
| Adhesive strength [N/mm] | 2.0 | 1.5 | 1.8 | 1.6 | 1.0 |

| | | | | | |
|---|---|---|---|---|---|
| *¹ plate trowelling with machine* *² application of the waterbased curable resin system **WE-2*** *³ blade trowelling with machine* *⁴ indicates if and how long the concrete was covered with a plastic sheet after the end of the blade trowelling* | | | | | |

Example 6 shows the distinct improvement of the peel strength by the mechanical incorporation of the applied waterbased curable resin system into the concrete layer with a trowelling machine. The average peel strength of the inventive samples is much higher than that of sample 22, in which the waterbased curable resin system was applied without being mechanically incorporated into the concrete structure, and also much higher than that of sample 23, in which no resin system was applied before the application of Sikafloor^{®}-161. Furthermore, the inventive samples show cohesive failure in the concrete structure for the peel strength, whereas the reference samples 22 and 23 show adhesive failure between the concrete structure and the coating. The inventive samples 19, 20 and 21 further show the long open time for the application of a coating system in the range of 1 to 40 h. The results for the adhesive strength again don't reflect the massively improved adhesion, as demonstrated by the results for the peel strength.

## Claims

1. Process for the preparation of a concrete structure comprising the steps of (a) casting a layer of fresh concrete, (b) application of a waterbased curable resin system onto the wet cast concrete layer and (c) mechanical incorporation of the applied waterbased curable resin system into the concrete layer, wherein the waterbased curable resin system is a waterbased epoxy resin system and the water content of the waterbased epoxy resin system is in the range of 40 to 80 wt.-%.

2. Process according to claim 1, wherein the waterbased epoxy resin system is a two component composition comprising an epoxy component and a curing component comprising an amine curing agent.

3. Process according to any one of the preceding claims, wherein the waterbased curable resin system, calculated on a dry basis, is applied in an amount of 10 to 150 g/m², preferably 10 to 100 g/m², more preferable 20 to 80 g/m², onto the concrete layer.

4. Process according to any one of the preceding claims, wherein the waterbased curable resin system is applied by spray application.

5. Process according to any one of the preceding claims, wherein the waterbased curable resin system is applied onto and mechanically incorporated into the wet concrete layer within 1 to 20 h after casting the concrete layer.

6. Process according to any one of the preceding claims, wherein the waterbased curable resin system is applied onto and mechanically incorporated into the concrete layer in the time period between the start and the end of the setting time of the concrete according to the Vicat needle method as described in ASTM C-191 after the concrete is walkable.

7. Process according to any one of the preceding claims, wherein the mechanical incorporation of the waterbased curable resin system into the concrete layer is accomplished by using plate trowelling and/or blade trowelling, particularly with a power trowel machine, which sweeps over the surface with rotating plates or blades.

8. Process according to claim 7, wherein the mechanical incorporation of the waterbased curable resin system into the concrete layer is accomplished by using at least one cycle of plate trowelling.

9. Process according to any one of the preceding claims, wherein the method for the mechanical incorporation of the applied waterbased curable resin system into the concrete layer is done by a mechanically operated machine with a horizontally rotating plate or with horizontally rotating blades sweeping over the surface of the setting concrete with the waterbased curable resin applied thereon, thus mixing up the topmost layer of concrete and incorporating the waterbased curable resin system.

10. Process according to any one of the preceding claims, wherein the waterbased curable resin system is free from hydraulic inorganic binders.

11. Concrete structure obtainable by the process according to any one of the preceding claims, containing a base layer of concrete and a surface layer of resin-modified concrete.

12. Method for coating comprising the steps of
(i) providing a concrete structure according to claim 11,
(ii) applying a coating composition, preferably an epoxy resin composition, onto the concrete structure,
(iii) curing the coating composition, and
(iv) optionally applying at least one further layer of a coating composition.

13. Coated structure obtainable by the method of claim 12.

14. Coated structure according to claim 13, which is a floor.

## Patentansprüche

1. Verfahren zur Herstellung einer Betonstruktur, umfassend die Schritte (a) Gießen einer Lage von frischem Beton, (b) Auftragen eines härtbaren Harzsystems auf Wasserbasis auf die nasse gegossene Betonlage und (c) mechanisches Einverleiben des aufgetragenen härtbaren Harzsystems auf Wasserbasis in die Betonlage, wobei das härtbare Harzsystem auf Wasserbasis ein Epoxyharzsystem auf Wasserbasis ist und der Wassergehalt des Epoxyharzsystems auf Wasserbasis in dem Bereich von 40 bis 80 Gew.-% liegt.

2. Verfahren gemäß Anspruch 1, wobei das Epoxyharzsystem auf Wasserbasis eine Zweikomponentenzusammensetzung ist, die eine Epoxykomponente und eine Härterkomponente umfassend einen Aminhärter umfasst.

3. Verfahren gemäß einem der vorstehenden Ansprüche, wobei das härtbare Harzsystem auf Wasserbasis, berechnet auf einer Trockenbasis, in einer Menge von 10 bis 150 g/m², vorzugsweise 10 bis 100 g/m², bevorzugter 20 bis 80 g/m², auf die Betonlage aufgetragen wird.

4. Verfahren gemäß einem der vorstehenden Ansprüche, wobei das härtbare Harzsystem auf Wasserbasis durch Sprühauftrag aufgetragen wird.

5. Verfahren gemäß einem der vorstehenden Ansprüche, wobei das härtbare Harzsystem auf Wasserbasis innerhalb von 1 bis 20 h nach dem Gießen der Betonlage auf die nasse Betonlage aufgetragen und mechanisch darin einverleibt wird.

6. Verfahren gemäß einem der vorstehenden Ansprüche, wobei das härtbare Harzsystem auf Wasserbasis in dem Zeitraum zwischen dem Beginn und dem Ende der Abbindezeit des Betons gemäß dem Vicat-Nadelverfahren, wie beschrieben in ASTM C-191, nachdem der Beton fußläufig ist, auf die Betonlage aufgetragen und mechanisch darin einverleibt wird.

7. Verfahren gemäß einem der vorstehenden Ansprüche, wobei das mechanische Einverleiben des härtbaren Harzsystems auf Wasserbasis in die Betonlage unter Verwendung von Plattenglätten und/oder Flügelglätten durchgeführt wird, insbesondere mit einer Leistungsglättmaschine, die mit rotierenden Platten oder Flügel über die Oberfläche streicht.

8. Verfahren gemäß Anspruch 7, wobei das mechanische Einverleiben des härtbaren Harzsystems auf Wasserbasis in die Betonlage unter Verwendung wenigstens eines Zyklus von Plattenglätten durchgeführt wird.

9. Verfahren gemäß einem der vorstehenden Ansprüche, wobei das Verfahren zum mechanischen Einverleiben des aufgetragenen härtbaren Harzsystems auf Wasserbasis in die Betonlage durch eine mechanisch betriebene Maschine mit einer horizontal rotierenden Platte oder mit horizontal rotierenden Flügel, die über die Oberfläche des abbindenden Betons mit dem darauf aufgetragenen härtbaren Harz auf Wasserbasis streichen, um die oberste Lagen von Beton aufzumischen und das härtbare Harzsystem auf Wasserbasis einzuverleiben.

10. Verfahren gemäß einem der vorstehenden Ansprüche, wobei das härtbare Harzsystem auf Wasserbasis frei von hydraulischen anorganischen Bindemitteln ist.

11. Betonstruktur, erhältlich durch das Verfahren gemäß einem der vorstehenden Ansprüche, enthaltend eine Basislage von Beton und eine Oberflächenlage von harzmodifiziertem Beton.

12. Verfahren zum Beschichten, umfassend die Schritte
(i) Bereitstellen einer Betonstruktur gemäß Anspruch 11,
(ii) Auftragen einer Beschichtungszusammensetzung, vorzugsweise einer Epoxyharzzusammensetzung, auf die Betonstruktur,
(iii) Härten der Beschichtungszusammensetzung und
(iv) gegebenenfalls Auftragen wenigstens einer weiteren Lage einer Beschichtungszusammensetzung.

13. Beschichtete Struktur, erhältlich durch das Verfahren gemäß Anspruch 12.

14. Beschichtete Struktur gemäß Anspruch 13, die ein Fußboden ist.

## Revendications

1. Procédé pour la préparation d'une structure de béton comprenant les étapes de (a) coulée d'une couche de béton frais, (b) application d'un système de résine durcissable à base d'eau sur la couche de béton coulé humide et (c) incorporation mécanique du système de résine durcissable à base d'eau appliqué dans la couche de béton, le système de résine durcissable à base d'eau étant un système de résine époxy à base d'eau et la teneur en eau du système de résine époxy à base d'eau étant dans la plage de 40 à 80 % en poids.

2. Procédé selon la revendication 1, le système de résine époxy à base d'eau étant une composition à deux composants comprenant un composant de type époxy et un composant de durcissement comprenant un agent de durcissement de type amine.

3. Procédé selon l'une quelconque des revendications précédentes, le système de résine durcissable à base d'eau, calculé sur une base sèche, étant appliqué en une quantité de 10 à 150 g/m², préférablement de 10 à 100 g/m², plus préférablement de 20 à 80 g/m², sur la couche de béton.

4. Procédé selon l'une quelconque des revendications précédentes, le système de résine durcissable à base d'eau étant appliqué par application par pulvérisation.

5. Procédé selon l'une quelconque des revendications précédentes, le système de résine durcissable à base d'eau étant appliqué sur et incorporé de manière mécanique dans la couche de béton humide dans les 1 à 20 h après la coulée de la couche de béton.

6. Procédé selon l'une quelconque des revendications précédentes, le système de résine durcissable à base d'eau étant appliqué sur et incorporé de manière mécanique dans la couche de béton dans la période de temps entre le début et la fin du temps de prise du béton selon le procédé à l'aiguille Vicat comme décrit dans la norme ASTM C-191 après que le béton est praticable.

7. Procédé selon l'une quelconque des revendications précédentes, l'incorporation mécanique du système de résine durcissable à base d'eau dans la couche de béton étant accomplie en utilisant un truellage à la plaque et/ou un truellage à la lame, particulièrement avec une truelle mécanique, qui balaie la surface avec des plaques ou des lames rotatives.

8. Procédé selon la revendication 7, l'incorporation mécanique du système de résine durcissable à base d'eau dans la couche de béton étant accomplie en utilisant au moins un cycle de truellage à la plaque.

9. Procédé selon l'une quelconque des revendications précédentes, le procédé pour l'incorporation mécanique du système de résine durcissable à base d'eau appliqué dans la couche de béton étant réalisé par une machine à fonctionnement mécanique dotée d'une plaque rotative horizontalement ou dotée de lames rotatives horizontalement balayant la surface du béton en cours de prise avec la résine durcissable à base d'eau appliquée sur celui-ci, mélangeant ainsi la couche de béton la plus supérieure et incorporant le système de résine durcissable à base d'eau.

10. Procédé selon l'une quelconque des revendications précédentes, le système de résine durcissable à base d'eau étant exempt de liants inorganiques hydrauliques.

11. Structure de béton pouvant être obtenue par le procédé selon l'une quelconque des revendications précédentes, contenant une couche de base de béton et une couche de surface de béton modifié par une résine.

12. Procédé pour un revêtement comprenant les étapes de
(i) fourniture d'une structure de béton selon la revendication 11,
(ii) application d'une composition de revêtement, préférablement d'une composition de résine époxy, sur la structure de béton,
(iii) durcissement de la composition de revêtement, et
(iv) éventuellement application d'au moins une couche supplémentaire d'une composition de revêtement.

13. Structure revêtue pouvant être obtenue par le procédé selon la revendication 12.

14. Structure revêtue selon la revendication 13, qui est un sol.
